# EUROPEAN PATENT APPLICATION

(11) **EP 1 563 777 A1**
(43) Date of publication of application: **17.08.2005**
(21) Application number: 04447044.1
(22) Date of filing: 17.02.2004
(51) Int. Cl.: A47J 36/38, A47J 37/12

(54) **Deep fat fryer**

(71) Applicant: van Ratingen, naamloze vennootschap, 3500 Hasselt (BE)
(72) Inventor: Van Ratingen, Joseph, 3500 Hasselt (BE)
(74) Representative: Luys, Marie-José

(57) **Abstract**

The present invention relates to a deep fat fryer comprising a container for containing a cooking fluid, the container being closable by a cover (1) the deep fat fryer further comprising condense collecting means (10) for collecting condense present on an inner face (17, 12) of the cover (1). The cover (1) is hingedly connectable to the container by means of a hinging connection (9). The hinging connection (9) comprises a first hinge part (19) which is connectable to the cover (1) and a second hinge part (29) which is hingedly connectable to the first hinge part (19) and to the container in view of forming the hinging connection (9). The condense collecting means comprise a reservoir (10) integrated in the second hinge part (29). The cover (1) is movable between an at least partly open position in which the reservoir (10) is accessible from outside and in which condense present on and flowing down along the inner face (17, 12) of the cover (1) may be collected in the reservoir (10), and a closed position of the cover (1) in which the reservoir (10) is at least partly closed by an inner face (17, 12) of the cover (1).

## Description

The present invention relates to a deep fat fryer, comprising a container for containing a cooking fluid, the container being closable by a cover, the deep fat fryer further comprising condense collecting means for collecting condense present on an inner face of the cover, according to the preamble of the first claim.

Such a deep fat fryer is known from EP-A-1.216.641. The deep fat fryer disclosed in EP-A-1.216.641 comprises a container which is closable by means of a cover hingedly connected thereto. The cover comprises an inner and an outer wall between which a water-absorbing filter is present. Underneath the inner wall of the cover, along the periphery of the cover, a seal is provided which extends along the entire periphery of the inner wall. Between the seal and the periphery of the inner wall of the cover, at a position below the inner wall, a gutter is formed along the entire periphery of the cover. The inner wall is inclined towards the gutter. As a consequence part of the condense resulting from vapour condensation against the inner face of the cover, flows into the gutter when the cover is in a closed position. The inner wall of the cover is further provided with an opening allowing the condensed condense collected in the gutter to flow from the gutter into a reservoir which is integrated into the cover between the inner and outer wall, upon opening of the cover. Besides the condensation water already collected in the gutter, also the condense still present on the inner face of the inner wall of the cover, can flow through the opening in the inner wall into the reservoir upon opening of the cover.

The deep fat fryer of EP-A-1.216.641 has however the disadvantage that the condense collecting means have a rather complicated structure, whereby the emptying of the reservoir for collecting condense coming from the inner face of the cover, is difficult to achieve. The reservoir is namely provided between the inner and outer wall of the cover.

The present invention aims at providing an alternative deep fat fryer having condense collecting means with an improved accessibility, which are easily to be emptied from collected vapour that had condensed against the inner face of the cover.

This is achieved with a deep fat fryer showing the technical features of the characterising part of the first claim.

In the deep fat fryer of the present invention, the cover is hingedly connectable to the container by means of a hinging connection. The hinging connection comprises (a) a first hinge part which is connectable to the cover and (b) a second hinge part which is connectable to the first hinge part and to the container in view of forming the hinge connection. The condense collecting means comprise a reservoir integrated in the second hinge part. The first and second hinge parts are hingeable with respect to each other so that the cover is movable between (a) an at least partly open position of the cover, in which the reservoir is accessible from outside and vapour condensed against the inner face of the cover may flow down along that inner face and be collected in the reservoir, and (b) a closed position of the cover/container in which the reservoir is at least partly closed by an inner face of the cover. The second hinge part is also connectable to the container containing the cooking fluid.

By integrating the reservoir into the second hinge part, the construction of the condense collecting means can be simplified as compared to the condense collecting means known from the art. Due to the integrated construction and to the fact that the reservoir is open towards the inner face of the cover in an at least partly open position of the cover, a reservoir may be obtained which is easily accessible and visible to a user when the cover is at least partly open or fully open. As a result, the degree of filling of the reservoir is easily observable and the reservoir is easy to clean, even manually. Further, because the reservoir is at least partly closed by an inner face of the cover in the closed position of the cover, the risk to accumulation of fat or dirt in the reservoir during the cooking operation may be minimised.

These are advantages as compared to the deep fat fryer known from EP-A-1.216.641, where the reservoir for collecting condense is provided between the outer and inner wall of the cover and is therefore not accessible, nor visible to the user. The construction of EP-A-1.216.641 also involves the risk that in case the reservoir is filled with water, in a subsequent cooking operation the water may be returned into the hot cooking fluid. Moreover, since the reservoir is poorly accessible, dirt accumulating in the reservoir reduces the water collecting capacity thereof and may interfere with the normal functioning of the deep fat fryer.

In a preferred embodiment, the reservoir and the second hinge part are made as one single piece, in view of reducing production costs.

A preferred embodiment of the deep fat fryer of the present invention is characterised in that the reservoir comprises a bottom delimited by a first and second longitudinal upright side wall and a first and second transverse upright side wall extending between the first and second longitudinal upright side wall. The first and second longitudinal and transverse side walls point away from the bottom of the reservoir in a direction towards the inner face of the cover in a closed position of the cover. The upright side walls together with the bottom thus enclose a reservoir in which the condensed vapour can be collected.

Another preferred embodiment of the deep fat fryer of the present invention, is characterised in that the connection connecting the second hinge part tot the first hinge part is formed in the first longitudinal upright side wall of the condense collecting reservoir. In that way, in the at least partly open position of the cover, condensed vapour may flow down along the inner face of the cover, and along the connection into the reservoir. Hereby, the risk to flowing of condense from the cover along the outer wall of the container in the open position of the cover, may be minimised. This is an advantage since it eliminates the need of cleaning the outer wall of the container of the deep fat fryer each time the cover is opened.

Also preferably, the deep fat fryer of this invention is characterised in that the bottom of the reservoir extends substantially parallel to the cover in a closed position of the cover. As a result, in the closed position of the cover, the bottom of the reservoir and cover form a shield protecting the first and second hinge part from fat deposition during the cooking operation.

A further preferred embodiment is characterised by the presence of a reservoir, at least one of the first and second longitudinal side of which extends substantially parallel to the side rim of the cover comprising the first hinge part. This allows the vapour condensed against the entire inner face of the cover as well as water condensed within the construction of the cover to flow down along that inner face and into the reservoir in the at least partly open position of the cover.

Still another preferred embodiment of the deep fat fryer of the present invention is characterised by a the cover comprising an inner wall which is connected to the outer wall, a filter, preferably a metal filter being positioned there between. The metal filter functions as a condensation means for oily components evaporating through the cover.

Further preferred embodiments are described in the claims appending to this application.

The invention is further elucidated by means of the following figures and description of the figures.
Figure 1 is a perspective view to the bottom side of the cover of a preferred embodiment of this invention, with the cover being in a closed position.
Figure 2 is a perspective view to the bottom side of the cover shown in figure 1, with the cover being in a partly open position.
Figure 3 is a perspective view to the bottom side of the cover shown in figure 1, the cover being in the open position.
Figure 4 is a cross section of the cover shown in figure 3, in a completely open position at the line A-A'.
Figure 5 is a detail of the lower part of figure 4.
Figure 6 is a cross section of the cover shown in figure 1 in the closed position, along the line A-A'.
Figure 7 is a detailed perspective view to the second hinge part and the water collecting reservoir.

The present invention solves the problem of providing a deep fat fryer having a container comprising a cooking fluid, the container being covered by a cover comprising condense collecting means. The inventor has namely observed that in the course of a cooking operation, water evaporates from the food, and that the thus formed vapour condenses on the colder cover of the deep fat fryer. To minimise condense reflux into the cooking fluid, which is specifically undesirable in case fat or oil are used as the cooking fluid, the deep fat fryer of this invention comprises a condense collector. In the present invention, the accessibility of the condense collector has been improved as is explained below in the figure description.

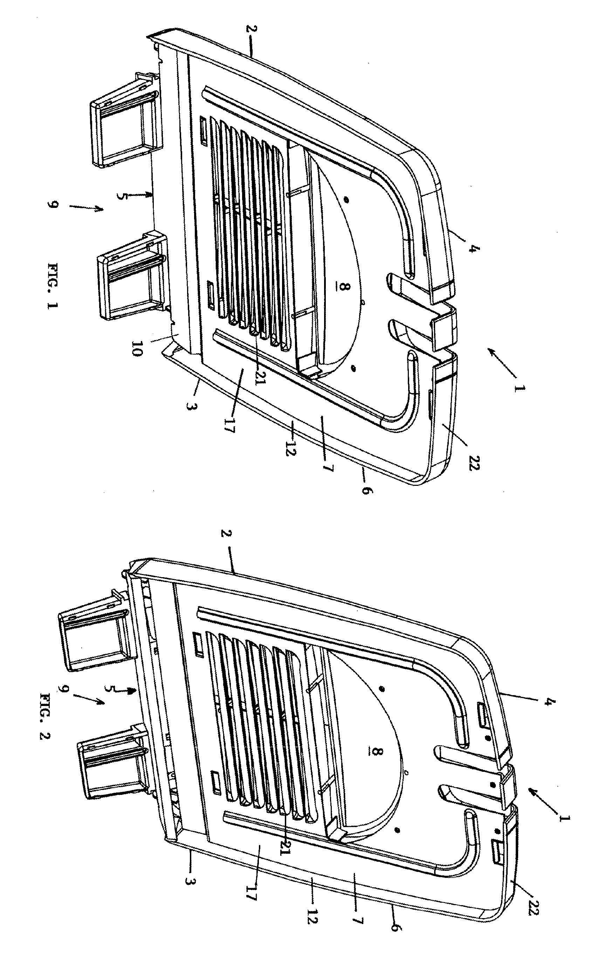

The cover 1 shown in figure 1 is provided to cover a container (not shown) for containing a cooking fluid. In a preferred embodiment, this cover 1 has a substantially rectangular shape with two opposite transverse sides 4, 5 and two opposite longitudinal sides 2, 3. The cover 1 may however have also any other desired shape, such as for example square-shaped or round. The cover 1 is provided to cover a container (not shown) for containing a cooking fluid, e.g. frying fat or oil or any other cooking fluid ought suitable by the person skilled in the art.

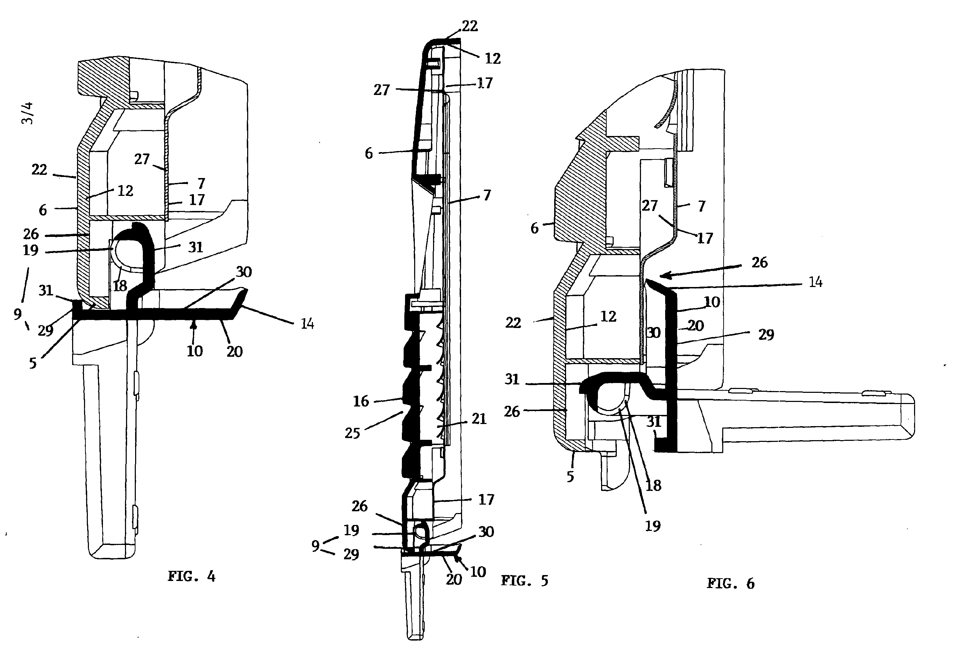

As can be seen from figure 4-6, the cover 1 comprises an outer wall 6 and an inner wall 7. The outer wall 6 comprises an inner face 12 facing the container, and an opposite outer face 22 The inner wall 7 comprises an inner face 17 facing the container and an intermediate face 27 facing the inner face 12 of the outer wall 6. The inner wall 7 is preferably made of a heat-resistant material, such as for instance metal, whereas the outer wall 6 of the cover may also be made of metal or of any other material ought suitable by the person skilled in the art, such as for example plastics for instance polyurethane or polypropylene.

In the embodiment shown, the inner side of the outer wall 6 is covered by the inner wall 7 over substantially the entire surface area. However, in the vicinity of transverse side 5 of the cover 1, over a small distance in the direction pointing towards the opposite transverse side 4 of the cover 1, the inner face 12 of the outer wall 6 may comprise an uncovered part or a part 26 which is countersunk with respect to the rest of the inner face 12.

The cover 10 is hingingly connectable to the container by means of a hinging connection 9. In the embodiment shown in figure 1-6, the hinging connection 9 is provided at a transverse side 5 of the cover 1. It is however also possible that the hinging connection 9 is provided at a longitudinal side 2, 3 of the cover 1.

The hinging connection 9 comprises a first hinge part 19 and a second hinge part 29. The first hinge part 19 is connectable to may be mounted to, integrated into or detachably connected to the cover 1, either directly or indirectly. The second hinge part 29 is connectable to the first hinge part 19 in view of forming the hinging connection 9.

The second hinge part 29 is also connectable to the cover 1. Integrated in the second hinge part 29, a reservoir 10 is provided as a condense collecting means. It is preferred that the reservoir 10 and the second hinge part 29 are made as one single piece. If so desired however, the reservoir may be or may comprise a collector which is removably mounted into the second hinge part. The reservoir 10 has an open top face which is open to the inner face 12, 17 of the cover 1 in an at least partly open position of the cover 1.

A preferred embodiment of this invention is characterised in that the first hinge part 19 of the hinging connection 9 is mounted to the inner face 12 of the outer wall 6 of the cover 1. As can best be seen from figure 4-6, the first hinge part 19 is mounted to uncovered part 26 of the inner face 12 of the outer wall 6 in the vicinity of the transverse side 5 of the cover 1. The first hinge part 19 may however also be mounted at any other suitable position on the cover 1, and may for instance be mounted on the inner face 17 of the inner wall 7.

In the closed position of the cover, as shown in figure 1 and 6, at least part of the inner face 12 of the outer wall 6 is covered by the condense collecting reservoir 10 (see below). The reservoir 10 will usually have a shape which is adapted to the shape of the cover in view of optimising condense collection. The condense collecting reservoir of this invention is characterised in that it comprises a bottom 20 which is delimited in height direction of the reservoir by an upright wall 13, 14, 23, 24. The upright wall extends from the bottom 20 towards the cover 1, in the closed position of the cover 1.

The reservoir 10 has a top face 30 which is preferably substantially open to the inner face 17 of the cover 1 in view of optimising condense collection. The top face 30 may however be partially covered, if the circumstances so require. In such case, the covered top face 30 may e.g. be perforated and the covering may be removably mounted in view of improving accessibility. The dimensions of the reservoir 10 and in particular of the top face 30 will usually be adapted by the person skilled in the art to guarantee optimum condense collection.

As can be seen from figure 1-3 with a rectangular cover, the reservoir 10 is preferably substantially rectangular and comprises a bottom 20 delimited by opposite longitudinal 13, 14 upright side walls, and opposite transverse 23, 24 upright side walls extending between the longitudinal side walls 13, 14. The reservoir 10 may however also have any other shape. The longitudinal 13, 14 and transverse 23, 24 side walls point away from the bottom 20 of the reservoir 10 towards the inner face 12 of the cover 1 in a closed position of the cover 1. In this way, a reservoir is formed for collecting condense which has condensed against the inner face of the cover 1 and has, flown down along, the inner face 12, 17 of the cover in an at least partly open position of the cover 1. As can be seen from figures 4 - 7, the longitudinal side wall 14 is inclined with respect to a plane perpendicular to the bottom 20. This is done to improve accessibility of the reservoir and to facilitate cleaning. However if so desired, the volume of the reservoir 10 may be further increased by having the longitudinal side walls 13, 14 slanting in a direction pointing away from each other.

The bottom 20 may take any shape ought convenient by the person skilled in the art. In the closed position of the cover 1, the bottom 20 of the reservoir 10 extends substantially parallel to the cover 1, but this is not an absolute requirement. The bottom may also slant with respect to the cover, or contain a gutter or any other means which could increase its water collecting capacity. As can best be seen from figure 1, it is preferred that the bottom 20 extends in line with the inner face 17 of the inner wall 7 in the closed position of the cover 1, and the longitudinal side wall 14 of the reservoir 10 is adjacent the side rim 15 of the inner wall 7 at a distance near the transverse side 5 of the cover 1. In other words, the inner face 17 of the inner wall 7 and the bottom face 30 of the bottom 20 of the reservoir 10 together form one connected whole. As a result, the reservoir 10 forms a shield protecting the first hinge part 19, mounted to the inner face 12 of the outer wall 6, against the deposition of fat or dirt during the cooking operation. In this closed position of the cover 1, the reservoir 10 may rest on an upper edge of the container (not shown) containing cooking fluid.

A preferred embodiment is characterised in that the reservoir 10 contains a water absorption device, if it desired to improve condense collection.

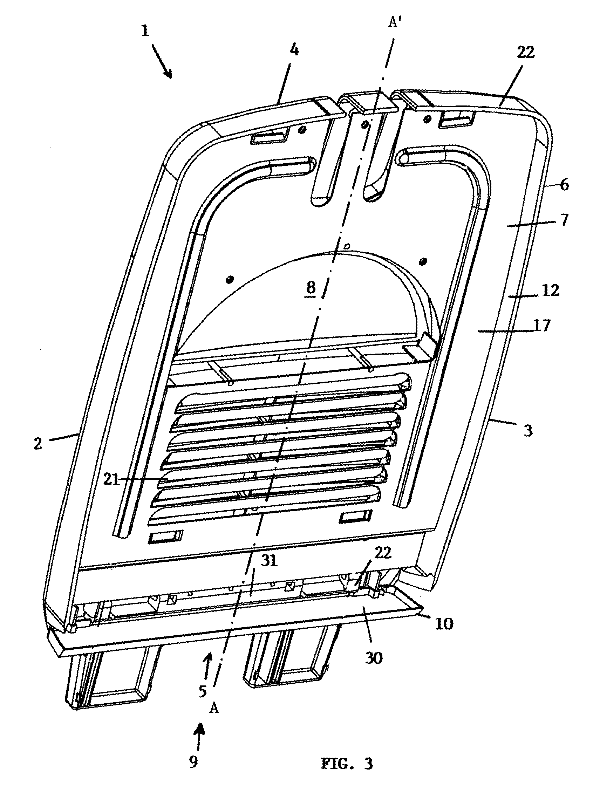

In an at least partly open position of the cover 1, as shown in figures 3-5, the inner face of the cover 1 is formed by the inner face 17 of the inner wall 7 and the uncovered part 26 of the inner face 12 of the outer wall 6 or a recessed part of the inner wall 7.

To provide an access to the exterior and to allow a vapour escape through the cover 1, the outer 6 and inner 7 wall of the cover 1 may be provided at corresponding positions with openings extending throughout the thickness of the inner 7, respectively outer wall 6. As can be seen from figure 1-3 and 5, part of the outer wall 6 of the cover 1 comprises of a plurality of parallel ribs 16 at regular distances from each other and extending in width direction of the cover 1 (not visible from figure 5). Between the ribs 16, elongated slots 25 extending in width direction of the cover 1 are present. At a corresponding position in the inner wall 7 of the cover 1, elongated slots 21 are present between ribs 17 forming the inner wall 7. The ribs 17 are preferably inclined with respect to a horizontal plane, thereby increasing the condensation surface of the inner wall 7 of the cover 1.

Between the inner 7 and outer wall 6 of the cover 1, at least at the position of the slots 21, 25, a filter, preferably a metal filter, is inserted for filtering the vapour escaping from the deep fat fryer into the environment. The filter also provides a condensation surface for evaporating oil or fat. It is however also possible to provide holes of any other type in any other way ought suitable by the person skilled in the art, or that the inner 7 and outer 6 wall do not contain other which holes extend throughout the entire thickness of the inner 8 and outer wall 6. As further shown in figure 1-3, a window 8 may be provided in the cover 1, allowing the user to look into the interior of the deep fat fryer during the cooking operation.

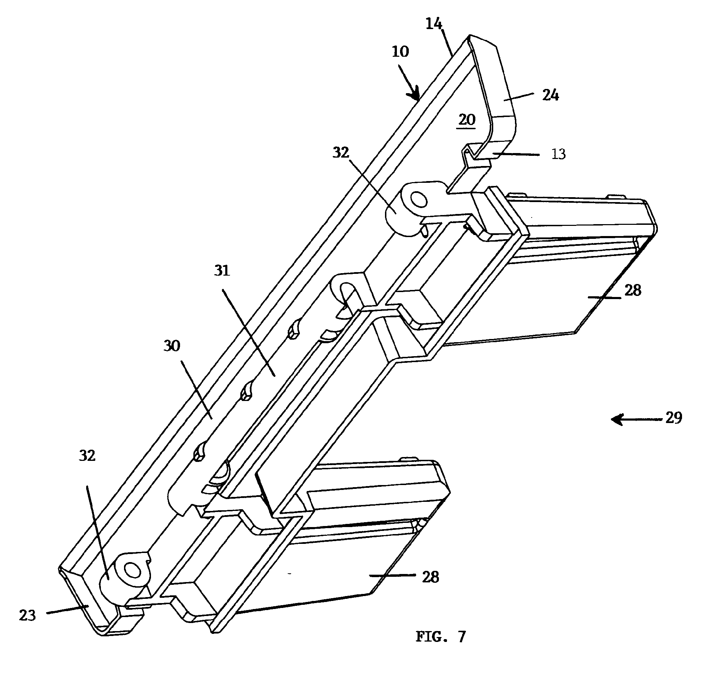

The preferred embodiment shown in figure 1-6 is characterised in that the second hinge part 29 is directly connectable to the first hinge part 19. The connection may however be indirect as well. The hinging connection may be achieved in many different ways known to the person skilled in the art. in a preferred embodiment, the first hinge part 19 comprises two pairs of clamps 18 which are spaced from each other in transverse direction of the cover (figure 7). The clamps 18 are mounted to the uncovered or recessed part 26 of the inner face 12 of the outer wall 6 of the cover 1. Between two pairs of clamps, a part 31 of the second hinge part 29 forming the hinging connection is received. In addition, each time between the clamps 18 of a pair of clamps a part 32 of the second hinge part 29 forming the hinging connection is received. Each pair of clamps 18 is connected to the adjacent part 32 and to part 31 of the second hinge part 29 by means of an axis extending throughout corresponding slots provided in the clamps 18 and the parts 32 and 31 of the second hinge part 29. The first 19 and second 29 hinge parts may however also be constructed in any other way ought suitable by the man skilled in the art allowing hingingly connecting the first and second hinge part. It is for instance possible to provide the first and second hinge part 19, 29 with cooperating, complementary means which allows the second hinge part to be connected to the first hinge part by means of a click mechanism.

The first 19 and second 29 hinge parts are hingeable with respect to each other between
(a) an at least partly open position of the cover, shown in figures 2-5 in which the reservoir 10 is open towards the outside. In this position, vapour which has condensed against, the cover 1 may flow down along the inner face 17, 12 of the cover 1 to be collected in the reservoir 10, and
(b) a closed position of the cover, shown in figure 1 and 6, in which the reservoir 10 is at least partly, but preferably entirely closed by the inner face 17, 12 of the cover 1.

In a preferred embodiment, the longitudinal side wall 13 of the reservoir 10 may comprise the parts 31, 32 of the second hinge part 29 forming the hinging connection 9. The preferred embodiment shown in figure 1-6 is however characterised in that one or more of the parts 31, 32 protrude from the bottom wall 20 of the reservoir 10 towards the cover 1 in a closed position of the cover 1. The parts 31, 32 are mounted at a position between the opposite longitudinal side walls 13, 14 of the reservoir 10. In case the bottom 20 of the reservoir extends to a position corresponding to the side wall 5 of the cover 1, collection of condense flowing down the inner wall 7 of the cover 1, as well as the space between the inner and outer wall 6, 7 may be guaranteed. In such case, the condense collecting reservoir will comprise an upright wall or protrusion which is aligned with the corresponding side wall 5 of the cover 1. In that way, the interior of the deep fat fryer may be well sealed from the environment in the closed position of the cover 1 (see figure 4).

The parts 31, 32 of the second part 29 forming the hinging connection are preferably situated at a position above the reservoir 10 in height direction of the deep fat fryer when the cover 1 is in the closed, open or intermediate position. Hereby, the risk that condense can flow off the cover along the outer wall of the container of the deep fat fryer in the at least partly open position of the cover, may be minimised. It is however also possible that the second hinge part 29 forming the hinging connection is not provided in the longitudinal side wall 14.

From figures 1-6, it can be seen that it is preferred that the reservoir 10 is also situated at a position below the first hinge part 19 in height direction of the deep fat fryer in any position of the cover. Figures 1-6 further show that the reservoir 10 extends along substantially the entire transverse side 5 of the cover 1, and that longitudinal side walls 13, 14 of the reservoir 10 preferably extend substantially parallel to the transverse side 5 of the cover comprising the first hinge part 19. Thus, the condensation water formed on the entire inner face 17 of the inner wall 7 of the cover 1 over the entire width thereof can be collected into the reservoir 10 in the at least partly open position of the cover 1.

Further, it is preferred that the first 19 and second 29 hinge parts are dimensioned and mounted with respect to each other and to the cover in such a way that, in the open position of the cover, the first hinge part 19 is covered by the second hinge part 29 together with the outer wall of the cover (not visible form the figures). As such, vapour condensed on an outer face of the cover is prevented from flowing down along the outer face of the cover and onto the first hinge part in the open position of the cover.

The second hinge part 29 is preferably removably mountable to the container. This may be achieved in various ways. In a possible embodiment, the second hinge part 29 of the hinging connection 9 comprises one, two or more protrusions 28 protruding from the reservoir 10 towards the container, as shown in figure 7. The protrusions 28 are provided to be removably mounted in a corresponding holder mounted to the container of the deep fat fryer (not shown). Alternatively, the holder may be formed in the wall of the container. However, the second hinge part 29 of the hinging connection 9 may be constructed in any other way ought suitable to the man skilled in the art in view of achieving a removable mounting to the container.

## Claims

1. A deep fat fryer comprising a container for containing a cooking fluid, the container being closable by a cover (1) the deep fat fryer further comprising condense collecting means (10) for collecting condense present on an inner face (17, 12) of the cover (1), **characterised in that** the cover (1) is hingedly connectable to the container by means of a hinging connection (9), **in that** the hinging connection (9) comprises a first hinge part (19) which is connectable to the cover (1) and a second hinge part (29) which is hingedly connectable to the first hinge part (19) and to the container in view of forming the hinging connection (9), **in that** the condense collecting means comprise a reservoir (10) integrated in the second hinge part (29), the cover (1) being movable between an at least partly open position in which the reservoir (10) is accessible from outside and in which condense present on and flowing down along the inner face (17, 12) of the cover (1) may be collected in the reservoir (10), and a closed position of the cover (1) in which the reservoir (10) is at least partly closed by an inner face (17, 12) of the cover (1).

2. The deep fat fryer as claimed in claim 1, **characterised in that** the second hinge part (29) and the reservoir (10) are made as one single piece.

3. The deep fat fryer according to claim 1 or 2, **characterised in that** the reservoir (10) comprises a bottom (20) delimited by a first (13) and second (14) longitudinal upright side wall and a first (23) and second (24) transverse upright side wall extending between the first (13) and second (14) longitudinal upright side wall, the first (13) and second (14) longitudinal side wall and the first (23) and second (24) transverse side wall pointing away from the bottom (20) of the reservoir (10) towards the cover.

4. The deep fat fryer as claimed in anyone of claims 1 -3, **characterised in that** the second hinge part (29) comprises means forming the hinging connection (9), the means being formed in the first longitudinal upright side wall (13) of the reservoir (10).

5. The deep fat fryer as claimed in anyone of claims 1-3, **characterised in that** the second hinge part (29) comprises means forming the hinging connection (9), the means being formed in a part which protrudes from the bottom (2) of the reservoir.

6. The deep fat fryer as claimed in any one of claims 1-5, **characterised in that** the reservoir (10) contains water absorption means.

7. The deep fat fryer according to any one of claims 1-6, **characterised in that** the first hinge part (19) is mounted to an inner face (12) of the cover (1) at a position in the vicinity of a side rim (5) of the cover (1), the reservoir (10) being situated at a position below the second hinge part (29) in height direction of the deep fat fryer in any position of the cover (1).

8. The deep fat fryer according to any one of claims 5-6, **characterised in that** at least one longitudinal side (13, 14) of the reservoir (10) extends substantially parallel to the side rim (5) of the cover (1) to which the hinging connection (9) is mounted.

9. The deep fat fryer according to any one of claims 1-8, **characterised in that** the second hinge part (29) comprises at least one protrusion (28) protruding from the reservoir (10) towards the container, the at least one protrusion (28) being removably mountable to the container.

10. The deep fat fryer according to any one of claims 1-9, **characterised in that** the cover (1) has a width, and **in that** the reservoir (10) extends along substantially the entire width of the cover (1).

11. The deep fat fryer according to any one of claims 1-10, **characterised in that** the cover (1) comprises an inner wall (7) and an outer wall (6), and **in that** a metal filter is positioned between the inner (7) and outer wall (6).

12. The deep fat fryer according to any one of claims 1-11, **characterised in that** the second hinge part (29) is made of plastic material.

13. A cover (1) as a part of the deep fat fryer according to any one of the preceding claims.

14. A hinging connection (9) comprising a first and a second hinge part (19, 29) as a part of the deep fat fryer according to any one of the preceding claims.
